# EUROPEAN PATENT APPLICATION

(11) **EP 3 051 400 A1**
(43) Date of publication of application: **03.08.2016**
(21) Application number: 14847138.6
(22) Date of filing: 22.09.2014
(51) Int. Cl.: G06F 3/048, G06F 13/10, G06F 13/14

(54) **APPARATUS AND METHOD FOR SHARING CONTENTS**

(30) Priority: 25.09.2013 KR 20130114074
(71) Applicant: Pixtree Technologies Inc., Seoul 152-766 (KR)
(72) Inventor: SHIN, Jae Seob, Seoul 121-767 (KR); KIM, Yeon Bae, Seoul 151-775 (KR); SON, Se Hoon, Seoul 150-771 (KR); SONG, Mun Sup, Gunpo-si Gyeonggi-do 435-774 (KR); YU, Hun Chan, Seoul 139-760 (KR)
(74) Representative: Isarpatent
(86) International application number: PCT/KR2014/008779
(87) International publication number: WO 2015/046837

(57) **Abstract**

An apparatus for sharing contents comprises a touch screen for sensing a touch input of a user regarding one or more contents, a memory for storing a command for sharing contents, a processor for generating a transmission image according to the command, and a communication unit for forming a connection with an external device and for transmitting the transmission image to the external device, wherein the command comprises commands for performing the steps of: displaying a device list including an area corresponding to the external device; connecting with the external device according to an input which drops the first content in the area corresponding to the external device on the device list from among touch inputs of a user regarding the first content among the contents; generating the transmission image; and transmitting the transmission image to the external device.

## Description

### Technical Field

This invention relates to a technique for playing back contents, and more particularly to a method for playing back and sharing a plurality of contents.

### Background Art

It is common that mobile devices, such as smartphones and the like, play back one of contents, such as videos and the like, at a time due to limited performance. However, the recent change in decoding of contents such as videos not only from software but also from hardware allows a plurality of contents to be played back at a time in mobile devices.

Mobile devices can provide the function of sharing images, which are obtained by playing back a plurality of contents, with external device. However, conventional user interface is inconvenient for users to connect a smartphone having a small display module to any external devices and instruct the smartphone to share any contents with the external devices.

### Disclosure

### Technical Problem

It is therefore an object of the present invention to provide an apparatus and method for sharing contents, which is capable of allowing a user to input an instruction to play back and share a plurality of contents on a limited screen of a mobile device.

### Technical Solution

To achieve the above object, according to an aspect, the present invention provides an apparatus for sharing contents, including: a touch screen configured to sense a user's touch input for one or more contents; a memory configured to store instructions to share the contents; a processor configured to generate a transmission image according to the instructions; and a communication unit which is connected with an external device and is configured to transmit the transmission image to the external device, wherein the instructions include: an instruction to perform a step of displaying a device list including an area corresponding to the external device; an instruction to perform a step of connecting the apparatus to the external device according to a user input of dragging a first content of the one or more contents and dropping the first content onto an area corresponding to the external device on the device list; an instruction to perform a step of generating the transmission image; and an instruction to perform a step of transmitting the transmission image to the external device.

The instructions may further include: an instruction to perform a step of stopping the generation of the transmission image corresponding to the first content when there occurs an input of dropping a second content of the one or more contents onto the area corresponding to the external device; and an instruction to perform a step of generating a transmission image corresponding to the second content and transmitting the transmission image corresponding to the second content to the external device.

The device list may be displayed in a predetermined area of the touch screen when the content is dragged to the predetermined area.

The device list may be displayed in one side edge of the touch screen when the content is dragged to the one side edge.

The instructions may further include: an instruction to perform a step of inserting a control interface in the transmission image when input information is received from the external device, and transmitting the control interface to the external device; and an instruction to perform a step of controlling playback of the content according to input information manipulating the control interface when the input information is received from the external device.

The instructions may further include: an instruction to perform a step of, when the apparatus has been already connected with another device and is pre-set to prevent from being simultaneously connected with the another device and the external device, releasing the connection with the another device.

The instructions may further include: an instruction to perform a step of, when the apparatus has been already connected with another device and is pre-set to allow the apparatus to be simultaneously connected with the another device and the external device, maintaining the connection with the another device.

According to another aspect, the present invention provides a method for a contents sharing apparatus to share contents, including: displaying a device list including an area corresponding to an external device; connecting the apparatus to the external device according to a user input of dragging a first content of the contents and dropping the first content onto an area corresponding to the external device on the device list; generating a transmission image; and transmitting the transmission image to the external device.

The method may further include: stopping the generation of the transmission image corresponding to the first content when there occurs an input of dropping a second content of the contents onto the area corresponding to the external device; and generating a transmission image corresponding to the second content and transmitting the transmission image corresponding to the second content to the external device.

The device list may be displayed in a predetermined area of a touch screen when the content is dragged to the predetermined area.

The device list may be displayed in one side edge of the touch screen when the content is dragged to the one side edge.

The method may further include: inserting a control interface in the transmission image when input information is received from the external device, and transmitting the control interface to the external device; and controlling playback of the content according to input information manipulating the control interface when the input information is received from the external device.

The method may further include: when the apparatus has been already connected with another device and is pre-set to prevent from being simultaneously connected with another device and the external device, releasing the connection with the another device.

The method may further include: when the apparatus has been already connected with another device and is pre-set to allow the apparatus to be simultaneously connected with the another device and the external device, maintaining the connection with the another device.

### Advantageous Effects

As described above, according to the present invention, it is possible for a user to easily input an instruction to share contents with an external device through a touch screen of a mobile device.

### Description of Drawings

Fig. 1 is a block diagram illustrating contents sharing apparatus according to one embodiment of the present invention.
Fig. 2 is a view showing an example where the contents sharing apparatus according to one embodiment of the present invention shares contents through a user interface.
Fig. 3 is a view showing another example where the contents sharing apparatus according to one embodiment of the present invention shares contents through a user interface.
Fig. 4 is a view showing one example of a process in which the contents sharing apparatus according to one embodiment of the present invention shares contents for a plurality of devices.
Fig. 5 is a view showing another example of the process in which the contents sharing apparatus according to one embodiment of the present invention shares contents for a plurality of devices.
Fig. 6 is a view illustrating a process in which the contents sharing apparatus according to one embodiment of the present invention displays a device list.
Fig. 7 is a view illustrating a screen on which a transmission image generated by the contents sharing apparatus according to one embodiment of the present invention is displayed.
Fig. 8 is a flow chart illustrating a process in which the contents sharing apparatus according to one embodiment of the present invention shares contents.

### Mode for Invention

The present invention can be modified in various ways and practiced with many embodiments. Hereinafter, some embodiments of the present invention will be described in detail with reference to the drawings. However, the present invention is not limited to the disclosed embodiments and it is to be understood that modifications, equivalents and substitutes thereof may be made and fall within the scope of the invention set forth in the claims.

In the specification, the phase of "transmitting a signal from one element to another" refers to not only transmitting the signal through direction connection from the one element to the another element but also transmitting the signal via still another element between the one element and the another element, unless stated otherwise.

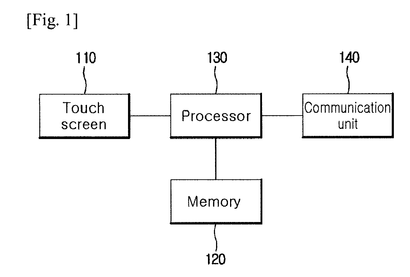

Fig. 1 is a block diagram illustrating contents sharing apparatus according to one embodiment of the present invention.

Referring to Fig. 1, contents sharing apparatus includes a touch screen 110, a memory 120, a processor 130 and a communication unit 140.

The touch screen 110 displays images received from the processor 130. The touch screen 110 can receive a touch input from a user through a finger or pen which touches on the touch screen 110, and can generate input information based on the received touch input. In this case, the touch input may include one or more of an input of user's touching on the touch screen 110, an input of release of the finger or pen from the touch screen, an input of dragging of movement of the finger or pen on the touch screen 110 in touch with touch screen 100, and a touch pressure. The input information is information indicating the above-mentioned inputs. The touch screen 110 transmits the input information to the processor 130.

The memory 120 stores one or more contents and a program including a user interface and instructions for playbacks of the contents.

The processor 130 generates content such as an image to be played back through the user interface, according to an instruction stored in the memory 120, and transmits it to the touch screen 110. A process of the processor 130 to generate the image through the user interface and display the image on the touch screen 110 is obvious to those skilled in the art and, therefore, explanation of which is omitted for the purpose of brevity. The user interface includes a thumbnail image area in which contents being played back are displayed as thumbnail images, and a main area in which contents are displayed at positions and sizes set by the user. At this time, when a user touches one of the contents displayed as the thumbnail images and drags it into one side in the main area, the processor 130 displays a device list listing one or more external devices which can be connected with the contents sharing apparatus. In this case, the device list may include icons or buttons for each of the one or more external devices which can be connected with the contents sharing apparatus. In addition, the processor 130 can establish connection with an external device through the communication unit 140 and can generate a transmission image to be transmitted to the connected external device. For example, the processor 130 can generate a transmission image (first content 210) to be played back on the entire screen. The processor 130 can transmit the transmission image to the external device through the communication unit 140. In this case, the external device may be a mobile device or a device such as a television which is connected to the communication unit 140 via a predetermined communication protocol and can receive and display the transmission image.

The communication unit 140 is connected to the external device and transmits the transmission image to the connected external device according to control of the processor 130. In addition, the communication unit 140 can receive contents from the external device and transmit them to the processor 130. In this case, the processor 130 can store the contents in the memory 120 for later playback. In addition, the communication unit 140 may include a plurality of communication modules of types known in the art.

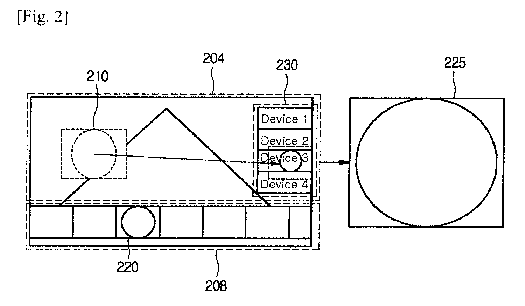

Fig. 2 is a view showing an example where the contents sharing apparatus according to one embodiment of the present invention shares contents through a user interface.

Referring to Fig. 2, a plurality of contents can be played back as thumbnail images in the thumbnail image area 203. When the processor 130 receives an input of touching content 210 of the contents and dragging it to a point in the main area 206 from a user, the processor 130 moves the content 210 to the point. It is here assumed that the processor 130 is playing back the first content 210 on the main area 204 according to a predetermined input from a user.

The processor 130 can receive a user input of touching, dragging and dropping the first content 210 being played back in the main area 204 through the touch screen 110 onto one of areas corresponding to devices (for example, an area corresponding to device 3 with reference to Fig. 2) displayed on the device list. It is here assumed that the device list displays the areas corresponding to the devices to indicate that device 1, device 2, device 3 and device 4 can be connected with the contents sharing apparatus.

The processor 130 performs a connection with a device corresponding to an area onto which the corresponding content is dropped according to the content dropping input, generates a transmission image obtained by mirroring the first content 210 according to the corresponding input, and transmits the transmission image to the device (for example, device 3) corresponding to the corresponding area through the communication unit 140.

In addition, the processor 130 can receive a user input of touching, dragging and dropping the second content 220, which is one of the contents in the thumbnail image area 208, through the touch screen 110 onto one of the areas corresponding to the devices displayed on the device list. The processor 130 generates a transmission image obtained by mirroring the second content 220 according to the corresponding input, and transmits the transmission image to the device corresponding to the corresponding area through the communication unit 140.

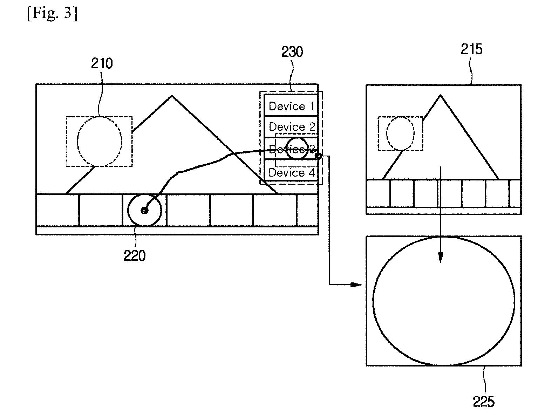

Fig. 3 is a view showing another example where the contents sharing apparatus according to one embodiment of the present invention shares contents through the user interface.

Referring to Fig. 3, if there occurs a predetermined event (for example, touch of a predetermined button by a user), the contents sharing apparatus can generate a transmission screen obtained by mirroring the screen of the contents sharing apparatus and transmit the transmission screen to an external device. At this time, when the user drags an image (for example, the first content 210) in the main area 204 on the touch screen 110 or one thumbnail image (for example, a thumbnail image of the second content 220) in the thumbnail image area 208 and drops it onto a particular area corresponding to the external device to which the transmission screen obtained by mirroring the screen of the contents sharing apparatus on the device list is being transmitted, the processor 130 can generate a transmission image of the first content 210 or the second content 220 displayed on the entire screen and transmit the transmission image to a device (for example, device 3 with reference to Fig. 3) corresponding to the corresponding particular area. Accordingly, the device which received the corresponding transmission image can output the first content 210 or the second content 220. That is, when content located on the main area 204 is output to an external device through drag and drop, the contents sharing apparatus according to one embodiment of the present invention generates a transmission image obtained by mirroring the screen of the contents sharing apparatus. In addition, when a content located on the thumbnail image area 208 is output to an external device through drag & drop, the contents sharing apparatus generates a transmission image of the corresponding content located on the thumbnail image area 208, which is displayed on the entire screen.

Accordingly, the user can send an external device an instruction to request a display through a screen mirroring a particular content simply through a drag & drop input for contents through a small touch screen 110. That is, for an input of selecting a content to be shared and selecting a device to which a transmission image is to be transmitted, through typical menus and buttons, unlike a PC, an input through the small touch screen 100 is highly likely to produce a wrong manipulation. Further, this is a time-consuming task since a process of selecting items from various menus has to be repeatedly performed and many touches must be performed, which may impose a high degree of fatigue on a user. To overcome this problem, the contents sharing apparatus according to one embodiment of the present invention allows a user to intuitively and simply input an instruction to request contents sharing between devices through the small touch screen 110.

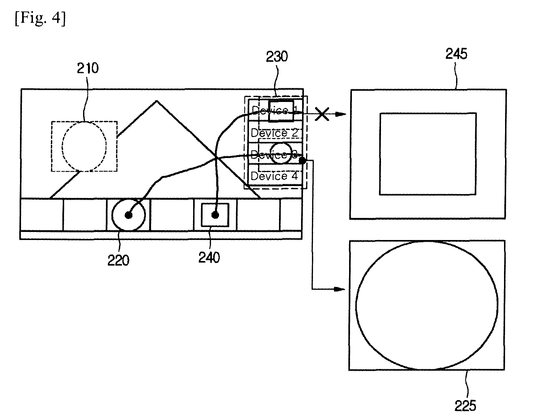

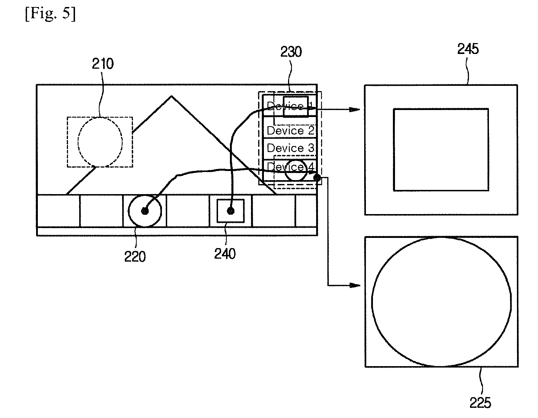

Fig. 4 is a view showing one example of a process in which the contents sharing apparatus according to one embodiment of the present invention shares contents for a plurality of devices. Fig. 5 is a view showing another example of the process in which the contents sharing apparatus according to one embodiment of the present invention shares contents for a plurality of devices. In typical, the contents sharing apparatus can be connected with one or more external devices depending on communication module included in the communication unit 140. Therefore, the memory 120 may include a predetermined instruction to prevent the contents sharing apparatus from being simultaneously connected to particular external devices. In addition, if the instruction is set to prevent the contents sharing apparatus from being simultaneously connected with an already-connected device and a device to be newly connected, the processor 130 can perform a process of releasing the connection with the already-connected device.

Hereinafter, it is assumed that the contents sharing apparatus according to one embodiment of the present invention cannot transmit an transmission image to devices 1 to 3 simultaneously and can transmit a transmission image to device 4 and one of devices 1 to 3 simultaneously.

Referring to Fig. 4, if a user touch input through the touch screen 110 of the contents sharing apparatus is an input of dragging and dropping a third content 240 onto a device list area corresponding to device 1, the processor 130 generates a transmission image obtained by mirroring the third content 240 and transmits it to device 1 through the communication unit 140. Thereafter, if a user touch input through the touch screen 110 of the contents sharing apparatus is an input of dragging and dropping the second content 220 onto a device list area corresponding to device 3, the processor 130 stops the generation and transmission of the third content 240 and terminates the connection with device 1. Thereafter, the processor 130 can connect with device 3, generate a transmission image of the second content 220, and transmit it to device 3.

However, the transmission image can be simultaneously transmitted to device 4 and one of devices 1 to 3. Therefore, the processor 130 can check that the transmission image can be simultaneously transmitted to the already-connected device to which the transmission image is being transmitted and the device to be newly connected according to the user touch input, connects with the new device while maintaining the transmission of the transmission image through the established connection, and transmit a new transmission image to the new device through the new connection.

Referring to Fig. 5, for example, if a user touch input through the touch screen 110 of the contents sharing apparatus is an input of dragging and dropping the third content 240 onto a device list area corresponding to device 1, the processor 130 generates a transmission screen mirroring the third content 240 and transmits it to device 1 through the communication unit 140. Thereafter, if a user touch input through the touch screen 110 of the contents sharing apparatus is an input of dragging and dropping the second content 220 onto a device list area corresponding to device 4, the processor 130 can connect with device 3 while maintaining the generation and transmission of the transmission image of the third content 240, generate the transmission image of the second content 220, and transmit it to device 3.

At this time, the processor 130 of the contents sharing apparatus can tie and display devices which cannot maintain the simultaneous connection, in order to allow a user to recognize the fact that the transmission of the transmission screen to the already-connected device may be stopped according to the drop of the content. For example, the processor 130 can display a single closed curve surrounding all areas corresponding to devices 1 to 3, indicating that devices 1 to 3 cannot maintain the simultaneous connection.

In addition, the processor 130 can display different areas with different colors on a device list corresponding to a currently-connected device of the devices or can display a mark indicating that the connection is maintained, on a corresponding area.

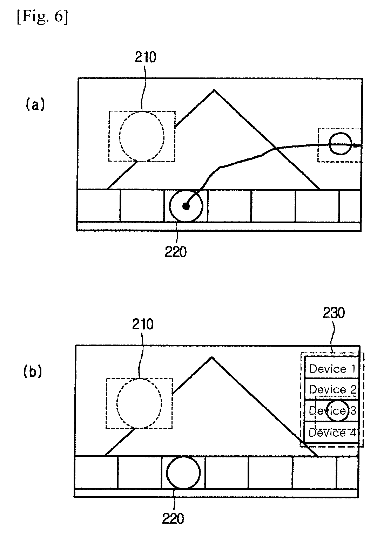

While it has been illustrated in the above that the contents sharing apparatus maintains the displaying of the device list on the touch screen 110, it is possible to display the device list only for a particular event without displaying the device list on the touch screen 110 at ordinary times. Hereinafter, a process of displaying a device list according to a user's input of dragging which is a particular event will be described in detail with reference to Fig. 6.

Fig. 6 is a view illustrating a process in which the contents sharing apparatus according to one embodiment of the present invention displays a device list.

Referring to Fig. 6, the processor 130 may not display a device list at ordinary times, as shown in Fig. 6A. In this case, a user selects and drags the second content 220 to one side edge (the right edge in Fig. 6A) of the screen. When the user's input of dragging is to drag the content to the one side edge of the screen, the processor 130 displays a device list 230 on the corresponding one side edge, as shown in Fig. 6. Accordingly, as the device list 230 is displayed, the user can drop the corresponding content onto one area in the device list and hence can share the corresponding content with an external device. Although it has been described with reference to Fig. 6 that the device list is displayed when the content is dragged to the one side edge of the screen, it is possible to display the device list on a predetermined area when the content is dragged to the predetermined area, depending on how to implement.

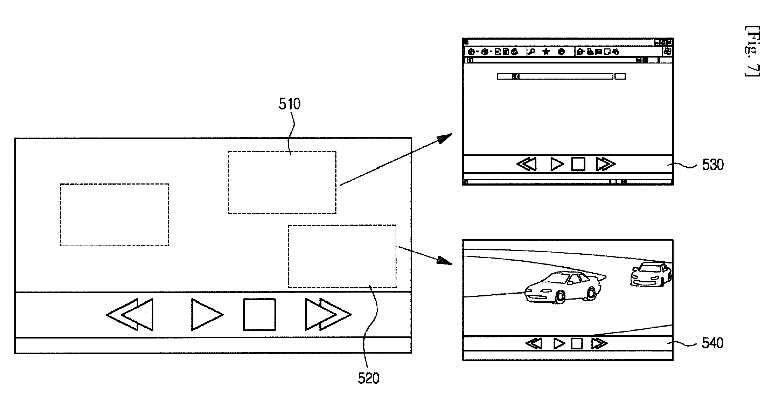

Fig. 7 is a view illustrating a screen on which a transmission image generated by the contents sharing apparatus according to one embodiment of the present invention is displayed.

Referring to Fig. 7, the processor 130 of the contents sharing apparatus can generate transmission images 510 and 520 and transmit them to external devices, respectively, through the communication unit 140. At this time, the processor 130 can transmit the transmission images 510 and 520 to the respective external devices for displaying of the transmission images, while displaying the transmission images 510 and 520 on the touch screen 110.

At this time, the processor 130 can transmit the transmission images including respective control interfaces 530 and 540 to the respective external devices. That is, the processor 130 can modify the transmission images to contain the respective control interfaces 530 and 540. In this case, each of the control interfaces may be an interface for typical controls such as playback, pause, rewinding, fast forward and so on of contents corresponding to the transmission images.

Accordingly, each of the external devices can display the respective transmission image and receive a user input of touching the respective control interface contained in the respective transmission image. For example, if an external device is a monitor equipped with a touch screen, the external device can receive a transmission image containing a control interface from the contents sharing apparatus and display the transmission image on its own screen. At this time, upon detecting a user's touch, the external device can generate input information according to the touch (for example, a coordinate of a point at which the touch is detected) and transmit it to the contents sharing apparatus. Then, the contents sharing apparatus can check that the user touches the control interface according to the input information received from the external device, and can control playback of a content corresponding to the transmission image according to the user's touch input. Such operation control for the content transmitted to the external device may be performed by the processor 130, independently of or simultaneously with control for contents in the main area of the contents sharing apparatus.

Accordingly, a user can control playback of contents output from a plurality of devices, independently or simultaneously, through the respective devices.

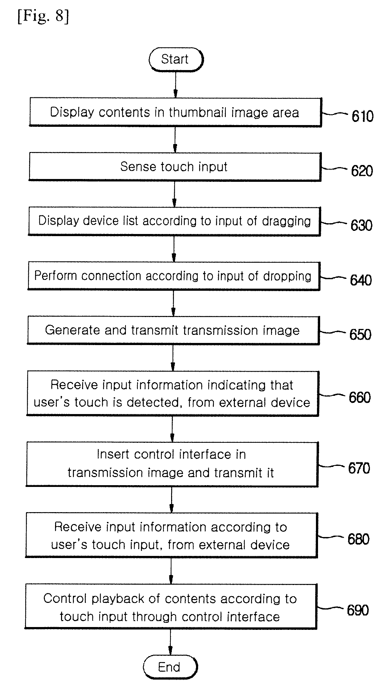

Fig. 8 is a flow chart illustrating a process in which the contents sharing apparatus according to one embodiment of the present invention shares contents.

Referring to Fig. 8, at Step 610, the contents sharing apparatus displays one or more contents in the thumbnail image area 203. At this time, the contents may be contents received from an external device through the communication unit 140, contents generated by a camera (not shown), and the like.

At Step 620, the contents sharing apparatus senses a user's touch input on the touch screen 110. In this case, the touch input may be inputs on the touch screen 110, such as touch, drag and touch release (drop), from the user, which are known in the art.

At Step 630, the contents sharing apparatus displays a device list according to a user's input of dragging. For example, if the user's input of dragging is to drag a content to an edge of the touch screen 110, the contents sharing apparatus displays the device list at an edge corresponding to the position to which the content is dragged.

At Step 640, the contents sharing apparatus performs connection for sharing of the contents according to a user's drop input. For example, if the user's drop input is to drop a content onto a certain area displayed in the device list, the contents sharing apparatus performs connection with an external device corresponding to the certain area.

At Step 650, the contents sharing apparatus generates a transmission image corresponding to the dragged content and transmits it to the external device.

At Step 660, the contents sharing apparatus receives input information indicating that a user's touch is detected, from the external device.

At Step 670, the contents sharing apparatus inserts a control interface in the transmission image generated at Step 650 and transmits it to the external device.

At Step 680, the contents sharing apparatus receives input information according to the user's touch input for the external device from the external device.

At Step 690, if the input information received at Step 680 indicates the touch input of touching the control interface, the contents sharing apparatus controls playback of the content according to the touch of the control interface. For example, if the user touches a 2X playback button of the control interface of the external device, the external device transmits input information according to the 2X playback button touch to the contents sharing apparatus. The contents sharing apparatus checks the input information to recognize the 2X playback button touch and plays back the content at a double speed. In addition, the contents sharing apparatus can generate a transmission image according to the 2X-played content and transmit it to the external device.

The above-described Step 540 is performed when the contents sharing apparatus is not connected with the external device corresponding to the area onto which the content is dropped. If the contents sharing apparatus has been previously connected with the external device corresponding to the area onto which the content is dropped, Step 640 may be omitted. In addition, as described above with reference to Fig. 4, when content is dropped onto an area corresponding to a new device to which a transmission image cannot be transmitted simultaneously with an already-connected device, the contents sharing apparatus can release the connection with the already-connected device and can perform connection with the new device. On the contrary, as described above with reference to Fig. 5, when content is dropped onto an area corresponding to a new device to which a transmission image can be transmitted simultaneously with an already-connected device, the contents sharing apparatus can perform connection with the new device without releasing the connection with the already-connected device.

While the present invention has been particularly shown and described with reference to exemplary embodiments thereof, it will be understood by those skilled in the art that various changes in form and details may be made therein without departing from the spirit and scope of the present invention as defined by the appended claims and equivalents thereof. Therefore, the disclosed embodiments have to be construed as not limitative but illustrative. The accompanying claims and their equivalents are intended to cover such forms or modifications as would fall within the scope and spirit of the disclosures.

## Claims

1. An apparatus for sharing contents, comprising:
a touch screen configured to sense a user's touch input for one or more contents;
a memory configured to store instructions to share the contents;
a processor configured to generate a transmission image according to the instructions; and
a communication unit which is connected with an external device and is configured to transmit the transmission image to the external device,
wherein the instructions include:
an instruction to perform a step of displaying a device list including an area corresponding to the external device;
an instruction to perform a step of connecting the apparatus to the external device according to a user input of dragging a first content of the one or more contents and dropping the first content onto an area corresponding to the external device on the device list;
an instruction to perform a step of generating the transmission image; and
an instruction to perform a step of transmitting the transmission image to the external device.

2. The apparatus according to Claim 1, wherein the instructions further include:
an instruction to perform a step of stopping the generation of the transmission image corresponding to the first content when there occurs an input of dropping a second content of the one or more contents onto the area corresponding to the external device; and
an instruction to perform a step of generating a transmission image corresponding to the second content and transmitting the transmission image corresponding to the second content to the external device.

3. The apparatus according to Claim 1, wherein the device list is displayed in a predetermined area of the touch screen when the content is dragged to the predetermined area.

4. The apparatus according to Claim 3, wherein the device list is displayed in one side edge of the touch screen when the content is dragged to the one side edge.

5. The apparatus according to Claim 1, wherein the instructions further include:
an instruction to perform a step of inserting a control interface in the transmission image when input information is received from the external device, and transmitting the control interface to the external device; and
an instruction to perform a step of controlling playback of the content according to input information manipulating the control interface when the input information is received from the external device.

6. The apparatus according to Claim 1, wherein the instructions further include:
an instruction to perform a step of, when the apparatus has been already connected with another device and is pre-set to prevent from being simultaneously connected with the another device and the external device, releasing the connection with the another device.

7. The apparatus according to Claim 1, wherein the instructions further include:
an instruction to perform a step of, when the apparatus has been already connected with another device and is pre-set to allow the apparatus to be simultaneously connected with the another device and the external device, maintaining the connection with the another device.

8. A method for contents sharing apparatus to share contents, comprising:
displaying a device list including an area corresponding to an external device;
connecting the apparatus to the external device according to a user input of dragging a first content of the contents and dropping the first content onto an area corresponding to the external device on the device list;
generating a transmission image; and
transmitting the transmission image to the external device.

9. The method according to Claim 8, further comprising:
stopping the generation of the transmission image corresponding to the first content when there occurs an input of dropping a second content of the contents onto the area corresponding to the external device; and
generating a transmission image corresponding to the second content and transmitting the transmission image corresponding to the second content to the external device.

10. The method according to Claim 8, wherein the device list is displayed in a predetermined area of a touch screen when the content is dragged to the predetermined area.

11. The method according to Claim 10, wherein the device list is displayed in one side edge of the touch screen when the content is dragged to the one side edge.

12. The method according to Claim 8, further comprising:
inserting a control interface in the transmission image when input information is received from the external device, and transmitting the control interface to the external device; and
controlling playback of the content according to input information manipulating the control interface when the input information is received from the external device.

13. The method according to Claim 8, further comprising:
when the apparatus has been already connected with another device and is pre-set to prevent from being simultaneously connected with the another device and the external device, releasing the connection with the another device.

14. The method according to Claim 8, further comprising:
when the apparatus has been already connected with another device and is pre-set to allow the apparatus to be simultaneously connected with the another device and the external device, maintaining the connection with the another device.
